# EUROPÄISCHE PATENTSCHRIFT

(11) **EP 4 373 784 B1**
(45) Veröffentlichungstag und Bekanntmachung des Hinweises auf die Patenterteilung: **01.04.2026**
(21) Anmeldenummer: 22748044.9
(22) Anmeldetag: 13.07.2022
(51) Int. Cl.: C01B 32/80, C01B 32/30, C01B 32/312

(54) **VERFAHREN ZUR HERSTELLUNG VON PHOSGEN**
METHOD FOR PREPARING PHOSGENE
PROCÉDÉ DE PRODUCTION DE PHOSGÈNES

(30) Priorität: 23.07.2021 EP 21187476
(43) Veröffentlichungstag der Anmeldung: 29.05.2024
(73) Patentinhaber: BASF SE, 67056 Ludwigshafen am Rhein (DE)
(72) Erfinder: JOSCH, Jan Pablo, 67056 Ludwigshafen (DE); ENGELS, Stefan, 68056 Ludwigshafen (DE); OLBERT, Gerhard, 69221 Dossenheim (DE); MATTKE, Torsten, 67056 Ludwigshafen (DE)
(74) Vertreter: BASF IP Association
(86) Internationale Anmeldenummer: PCT/EP2022/069554
(87) Internationale Veröffentlichungsnummer: WO 2023/001651

(56) Entgegenhaltungen:
- WO-A1-2015/027686
- DE-A1- 3 327 274
- US-A1- 2020 222 871
- EFACTORTHREE, 4 March 2020 (2020-03-04), XP002805249, Retrieved from the Internet <URL:https://efactor3.com/activated-carbon-efficiently-drying-of-extremely-wet-material/> [retrieved on 20210105]
- DATABASE WPI Week 201829, Derwent World Patents Index; AN 2018-30818K, XP002805250

## Beschreibung

Die Erfindung betrifft ein Verfahren zur Herstellung von Phosgen durch Gasphasenreaktion von Kohlenmonoxid und Chlor in Gegenwart eines Katalysators, insbesondere in Gegenwart eines Aktivkohlekatalysators, in dem der Katalysator durch Reduktion des Wassergehalts getrocknet wird.

Phosgen ist ein wichtiger Hilfsstoff bei der Herstellung von Zwischen- und Endprodukten in nahezu allen Zweigen der Chemie. Insbesondere stellt Phosgen ein weit verbreitetes Reagens für die industrielle Carbonylierung, beispielsweise bei der Herstellung von Isocyanaten oder organischen Säurechloriden dar. Das mengenmäßig größte Verwendungsgebiet ist dabei die Herstellung von Diisocyanaten für die Polyurethanchemie, insbesondere Toluylendiisocyanat oder 4,4-Diisocyanat-Diphenylmethan.

Phosgen wird großtechnisch in einer katalytischen Gasphasenreaktion von Kohlenmonoxid und Chlor in Gegenwart eines Katalysators, beispielsweise eines Aktivkohlekatalysators, gemäß der Reaktionsgleichung:

CO+Cl₂⇄2COCl₂

hergestellt. Die Reaktion ist stark exotherm mit einer Reaktionsenthalpie ΔH von -107,6 kJ/mol. Die Reaktion wird üblicherweise in einem Rohrbündelreaktor nach dem in Ullmann's Encyclopedia of Industrial Chemistry im Kapitel "Phosgen" (5th Ed. Vol. A 19, p 413 ff., VCH Verlagsgesellschaft mbH, Weinheim, 1991) beschriebenen Verfahren hergestellt. Danach wird körniger Katalysator mit einer Korngröße im Bereich von 3 bis 5 mm in Rohren mit einem typischen Innendurchmesser zwischen 35 und 70 mm, typischerweise zwischen 39 und 45 mm, eingesetzt. Die Reaktion beginnt bei Temperaturen von 40 bis 50 °C, steigt jedoch in den Rohren bis auf 400 °C und mehr und fällt dann schnell wieder ab. Bei der Reaktion wird üblicherweise Kohlenmonoxid im Überschuss eingesetzt, um zu gewährleisten, dass das gesamte Chlor umgesetzt und weitgehend chlorfreies Phosgen erzeugt wird, da Chlor bei der anschließenden Verwendung von Phosgen zu unerwünschten Nebenreaktionen führen kann. Die Reaktion kann drucklos durchgeführt werden, wird jedoch in der Regel bei einem Überdruck von 200-600 kPa (2-6 bar) durchgeführt. In diesem Druckbereich kann das gebildete Phosgen nach dem Reaktor mit Kühlwasser oder anderen, beispielsweise organischen Wärmeträgern kondensiert werden, so dass der Kondensator wirtschaftlicher betrieben werden kann.

Das Wärmemanagement im Reaktor ist eine der größten Herausforderungen in der Phosgenproduktion, die für einen sicheren und wirtschaftlichen Prozess erforderlich ist. Im Allgemeinen stehen verschiedene Methoden zur Verfügung, um die Reaktionswärme abzuleiten. Der Haupteinfluss auf das Wärmemanagement hat ein spezifisches Reaktordesign und eine Katalysatorauswahl bzw. ein spezifisches Katalysatordesign, die eine schnelle Entfernung der resultierenden Reaktionswärme durch Verringerung von Wärme- und Massetransportbeschränkungen ermöglicht.

Im Stand der Technik wird eine Vielzahl von Reaktorkonstruktionen beschrieben. Im Allgemeinen werden die Kontaktrohre des Rohrbündelreaktors durch einen Wärmeträger umspült, der die resultierende Reaktionswärme aus dem Reaktor ableitet. Es hat sich gezeigt, dass eine Queranströmung der Kontaktrohre die Wärmeableitung verbessert. Um dies zu erreichen, werden in der Regel Umlenkplatten im Reaktor installiert, die durch einen mäanderförmigen Durchfluss des Wärmeträgers einen Querstrom zu den Kontaktrohren des Wärmeträgers ermöglichen.

So wird beispielsweise ein typischer Großreaktor zur Herstellung von Phosgen in der internationalen Patentanmeldung WO 03/072237 A1 beschrieben.

Der Durchsatz des Reaktors kann durch die sogenannte Flächen- oder Phosgenlast des Reaktors bestimmt werden, die definiert wird als die Menge des umgewandelten Phosgens pro Zeiteinheit (in der Regel in kg/s ausgedrückt), basierend auf der Querschnittsfläche des Katalysators, d.h. der Summe der inneren Querschnittsflächen der katalytischen Kontaktrohre (in der Regel in m² angegeben). Zur Kontrolle der Reaktionswärme werden daher im Stand der Technik in der Regel Flächenlasten zwischen 0,5 und 2 kg Phosgen/m²s beschrieben.

Der Begriff "Reaktor" in der vorliegenden Anmeldung umfasst alle Teile einer Anlage, in denen die chemische Umwandlung von Kohlenmonoxid und Chlorgas in Phosgen stattfindet. Oft ist ein Reaktor in diesem Sinne eine einzelne Komponente, die durch einen Reaktorbehälter definiert wird. Ein Reaktor im Sinne der vorliegenden Anmeldung kann jedoch auch zwei oder mehr Bauteile mit getrennten Reaktorbehältern umfassen, die z. B. nacheinander (seriell) angeordnet sind. In diesem Fall bezieht sich die Flächenbelastung auf den Gesamtumsatz, d. h. den Phosgenstrom, der die letzte Reaktorkomponente, z. B. den letzten Reaktorbehälter, verlässt.

In der internationalen Patentanmeldung WO 2010/076208 A1 wird eine optimierte Anordnung der Kontaktrohre offenbart, die zu gleichmäßigen Wärmeübergangskoeffizienten über den Reaktorquerschnitt an der Grenzschicht zwischen den Kontaktrohren und dem Wärmeträger führt. Dies konnte durch eine spezifische Ausrichtung der Strömungswege des Wärmeträgers in jedem Reaktorquerschnitt erreicht werden. In einem solchen Reaktor mit optimiertem Wärmedurchflussprofil konnten Flächenlasten von bis zu 2,74 kg Phosgen/m²s erreicht werden.

Neben dem Reaktor hat der Katalysator einen großen Einfluss auf die Effizienz des jeweiligen Phosgen-Produktionsprozesses.

Wie in der Veröffentlichung von Mitchell et al. "Selection of carbon catalyst for the industrial manufacture of phosgene", Catal. Sci. Technol., 2012, Band 2, S. 2109-2115, beschrieben kommt es während der Synthese von Phosgen zu einer Deaktivierung oder Abbrand des Katalysators, so dass nach entsprechender Betriebszeit eine Abschaltung der Anlage und eine Erneuerung des Katalysators erforderlich ist. Dies kann zum einen durch Oxidation von Kohlenstoff durch Sauerstoffspuren im zugeführten Chlorgas verursacht werden. Andererseits kann es bei höheren Temperaturen, typischerweise über 300 °C, auch eine Chlorreaktion mit dem Aktivkohlekatalysator geben, die zur Bildung von flüchtigem Tetrachlorkohlenstoff (CCl₄) führt. Mitchell et al. bewerteten 7 kommerziell erhältliche Kohlenstoffkatalysatoren, die von verschiedenen Lieferanten für die Herstellung von Phosgen empfohlen werden. Die geringe Aktivität einiger Katalysatoren wurde auf die mesoporöse Natur des Katalysators zurückgeführt.

Weiterhin beschreibt Christopher J. Mitchell et al. in, "Selection of carbon catalyst for the industrial manufacture of phosgene", Catal. Sci. Technol., 2012, Band 2, S. 2109-dass Kohlenstoffkatalysatoren zur Herstellung von Phosgen verwendet werden.

Insbesondere werden in dieser Veröffentlichung verschiedene Kohlenstoffkatalysatoren (poröse Materialien) getestet. Zwei handelsübliche Katalysatoren, nämlich Chemviron Solcarb 208C DM und Donau Supersorbon K40, weisen die beste katalytische Aktivität auf.

Normalerweise werden Aktivkohlen aus natürlichen Quellen wie Kokosnussschale, Holz, Oliven-kerne als Katalysator verwendet. Die poröse Struktur solcher Aktivkohlen enthält besonders Mikroporen (< 2 nm) und Makroporen (> 50 nm). Die Hauptreaktion findet in den Mikroporen statt, die eine hohe Oberfläche darstellen, während die Makroporen für den Transport von Rohstoffen innerhalb und dem Produkt außerhalb des Katalysatorpartikels verantwortlich sind.

Die Aktivität des Katalysators hängt von einem geeigneten Verhältnis von Transport- und Reaktionsporen und damit von Makroporen zu Mikroporen ab.

Aktivkohle zeichnet sich durch eine sehr hohe spezifische Oberfläche aus. Diese wird hauptsächlich durch die poröse Struktur und insbesondere durch die Microporen (< 2 nm) hervorgerufen (US9174205).

Es ist bekannt, dass bei entsprechender Luftfeuchte Wasser in den Poren kondensieren kann. So ist in "https://www.arnold-chemie.de/zeolithe/temperaturadsorbens-feuchte/" beschrieben, dass Aktivkohle im Grunde hydrophob ist, jedoch gilt, dass ab einer relativen Luftfeuchtigkeit von 60 % die Porenkondensation einen Umfang annimmt, der den erfolgreichen Einsatz der Kohle als Adsorbens verhindert.

Die Adsorption von Wasserdampf an Aktivkohle folgt dem seltenen Isothermentyp V, mit zunächst minimaler Adsorption und dann schnell einsetzender Porenfüllung.". In der Patentliteratur, insbesondere in der CN204417136, der CN107906925 und der US2016/0137511 werden verschiede Apparate zur Trocknung von Aktivkohle bei der Herstellung und vor dem Einbau zum Beispiel als Katalysator in Reaktoren beschrieben.

DE 33 27 274 A1 beschreibt ein neues Verfahren zur Herstellung von Phosgen durch Umsetzung von Chlor mit Kohlenmonoxid in Gegenwart von Aktivkohle als Katalysator unter gleichzeitiger Erzeugung von Dampf unter zweistufiger Reaktionsführung, wobei man die Reaktion in einer ersten Stufe bei über 250°C unter Umsetzung von 95 bis 98% des eingesetzten Chlors durchführt, die hierbei anfallende Wärme zur Erzeugung von Dampf eines Drucks von 5 bis 50 bar nutzt und schließlich die Reaktion in einer zweiten Reaktionsstufe bei 50 bis 100°C zu Ende führt.

US 2020/222871 A1 beschreibt ein Verfahren zur Reinigung einer Phosgen führenden Vorrichtung durch Druckbeaufschlagung mit Ammoniakgas bis zu einem konstanten Druck. Auf diese Weise werden Phosgenrückstände in der zu reinigenden Vorrichtung effektiv zersetzt.

WO 2015027686 A1 beschreibt einen Katalysator zur Herstellung von Phosgen und ein Verfahren zur Herstellung von Phosgen unter Verwendung des Katalysators. Das Verfahren umfasst: Modifizierung der Oberfläche eines Aktivkohlenüberzugs/eines strukturellen Katalysators aus geschäumtem Siliziumkarbid mit einem Alkalimetallsalz; Befüllung der Katalysatoren mit unterschiedlicher Dicke des Aktivkohlenüberzugs und unterschiedlicher Menge des Alkalimetallsalzes in verschiedenen Abschnitten in axialer Richtung des Mehrrohrreaktors des Festbetts und Herstellung von Phosgen unter Verwendung von Cl2 und CO.

CN 107906925 A1 beschreibt eine Regenerations-Aktivkohletrocknungsanlage. Die Anlage umfasst eine Spiralfördereinrichtung, eine Heißluftstromerzeugungseinrichtung, eine erste Trenneinrichtung und eine Trocknungs- und Trenneinrichtung.

Die Füllung der Reaktionsrohre für die Phosgensynthese mit Aktivkohle erfolgt im Allgemeinen unter Umgebungsluft und somit der gerade vorliegenden entsprechenden Feuchte. Während des Füllvorgangs kann die Aktivkohle Wasser binden und ggf. kondensieren. Das kondensierte Wasser kann bei Inbetriebnahme des Reaktors mit Chlor und CO zur Salzsäurebildung und Korrosion bzw. mit Chlor zu Feststoffablagerungen im Reaktorausgang und Folgesystemen führen. Weiter ist eine Desaktivierung durch die Inbetriebnahme eines feuchten Katalysators beobachtet worden.

Ziel dieser Anwendung ist es, die Nachteile des Standes der Technik zu überwinden.

Die der vorliegenden Erfindung zugrunde liegende technische Aufgabe besteht darin, ein Verfahren für die Herstellung von Phosgen bereitzustellen, dass Korrosionsschäden in Anlageteilen unterbindet, Salzsäurebildung reduziert, Feststoffablagerungen am Reaktorausgang vermeidet und eine erhöhte Katalysatoraktivität des eingesetzten Katalysators liefert.

Gelöst wird dieses technische Problem durch das Verfahren gemäß vorliegendem Anspruch 1.

Die Erfindung betrifft demnach ein Verfahren zur Herstellung von Phosgen durch Umsetzung von Chlor und CO an einem Aktivkohlekatalysator, dadurch gekennzeichnet das der Aktivkohlekatalysator durch Reduktion des Wassergehalts getrocknet wird, wobei die Trocknung folgende Schritte umfasst:
a) Inkontaktbringen des Katalysators mit einem inerten Gasstrom
b) Bestimmung der Restfeuchte des Katalysators durch Bestimmung der Feuchte im Abgasstrom
c) Beendung des Trocknungsprozesses nach Erreichen der gewünschten Feuchte im Abgasstrom durch Wechsel vom inerten Gas auf die Reaktionsgase sowie optional
d) aufheizen des Katalysatorbetts und /oder des inerten Gases während des Trocknungsprozesses.
wobei die Trocknung im Phosgenproduktionsreaktor erfolgt und die Restfeuchte des Katalysators durch Taupunktmessung des Abgasstroms am Reaktorausgang bestimmt wird und die Trocknung mindestens bis zu einem Taupunkt von -20°C durchgeführt wird.

Mit anderen Worten betrifft die Erfindung ein Verfahren zur Herstellung von Phosgen durch Umsetzung von Chlor und CO an einem Aktivkohlekatalysator, dadurch gekennzeichnet, dass der Aktivkohlekatalysator vor Inkontaktbringen mit den Reaktionsgasen Chlor und CO durch Reduktion des Wassergehalts getrocknet wird, wobei die Trocknung folgende Schritte umfasst:
a) Inkontaktbringen des Katalysators mit einem inerten Gasstrom
b) Bestimmung der Restfeuchte des Katalysators durch Bestimmung der Feuchte im Abgasstrom
c) Beendigung des Trocknungsprozesses nach Erreichen der gewünschten Feuchte im Abgasstrom durch Wechsel vom inerten Gas auf die Reaktionsgase Cl und CO
   sowie optional
d) aufheizen des Katalysatorbetts und /oder des inerten Gases während des Trocknungsprozesses.
wobei die Trocknung im Phosgenproduktionsreaktor erfolgt und die Restfeuchte des Katalysators durch Taupunktmessung des Abgasstroms am Reaktorausgang bestimmt wird und die Trocknung mindestens bis zu einem Taupunkt von -20°C durchgeführt wird.

Überraschend wurde gefunden, dass durch das oben beschriebene Verfahren der Trocknung des Katalysators Korrosionsschäden am Reaktor und den nachgeschalteten Anlagenteilen weitestgehend vermieden werden und gleichzeitig eine höhere Aktivität des eingesetzten Katalysators erreicht wird. Des Weiteren entstehen deutlich weniger Feststoffablagerungen am Reaktorausgang, so dass eine Verlängerung der Reinigungsintervalle erreicht werden kann oder die Reinigung schneller durchgeführt werden kann. Der eigentliche Schritt der Trocknung bedeutet zwar einen zusätzlichen Zeitaufwand und führt möglicherweise zu einer Verlängerung der regulären Abstellzeiten für die Wartung und Instandsetzung der Anlage, so dass üblicherweise auf eine intensive Trocknung des Katalysators verzichtet wird oder die Trocknung lediglich zum Abschluss der Katalysatorsynthese beim Katalysatorlieferanten durchgeführt wird. Überraschend hat sich aber gezeigt, dass die erzielten Effekte durch die Trocknung, nämlich eine deutlich erhöhte Katalysatoraktivität und eine verlängerte Lebenszeit des Reaktors gekoppelt mit einem geringeren Reinigungsaufwand während einer Abstellung, den zusätzlichen Schritt der Trocknung mehr als überkompensieren und somit den zusätzlichen Aufwand rechtfertigen.

Das Verfahren zur Herstellung von Phosgen durch Umsetzung von Chlor und CO an einem Aktivkohlekatalysator zeichnet sich durch die Reduktion des Wassergehalts der Aktivkohle aus wobei die Trocknung mehrere Schritte umfasst.

In Schritt a) der Trocknung gemäß vorliegender Erfindung wird der Katalysator mit einem inerten Gasstrom in Kontakt gebracht.

Generell kann dazu jedes im Bezug auf den Katalysator inert wirkendes Gas verwendet werden. Inert in Rahmen der vorliegenden Erfindung meint, dass das Gas selbst nicht mit dem Katalysator reagiert und so keine strukturellen oder chemischen Veränderungen durch das Inkontaktbringen des Katalysators mit dem inerten Gas hervorgerufen werden.

Bevorzugt wird als inertes Gas Ar, CO₂, CO, N₂ und Luft oder Mischungen davon verwendet. Weiter bevorzugt wird als inertes Gas CO, N₂ und Luft oder Mischungen davon verwendet. Besonders bevorzugt wird N₂ und Luft oder Mischungen davon verwendet. Beispielsweise wird Luft verwendet.

Generell kann das verwendete inerte Gas in jeder Qualität verwendet werden, solange es den Zweck der Trocknung des Aktivkohlekatalysators durch Aufnahme von Wasser erfüllt. Ein solches Gas wird im Rahmen der vorliegenden Erfindung als trockenes Inertgas bezeichnet. Bevorzugt hat das verwendete Inertgas einen Wassergehalt von 0,5 mg/m³ bis 300 mg/m³, weiter bevorzugt einen Wassergehalt von 0,5 mg/m³ bis 120 mg/m³, weiter bevorzugt einen Wassergehalt von 0,5 mg/m³ bis 40 mg/m³, besonders bevorzugt einen Wassergehalt von 0,5 mg/m³ bis 10 mg/m³. Beispielsweise einen Wassergehalt von 12 mg/m³, 9 mg/m³, 7 mg/m³, 5 mg/m³, 3 mg/m³, 2 mg/m³ oder 1 mg/m³.

Inkontaktbringen im Rahmen der vorliegenden Erfindung bedeutet der Kontakt zwischen fester Katalysatorphase und der Gasphase des inerten Gases, wobei das Inkontaktbringen jegliche Form des Kontakts zwischen den zwei Phasen umfasst wie z.B. das Vorbeiströmen oder das Durchströmen der Katalysatorschüttung sowie das Durchströmen der Katalysatorpartikel.

Besonders vorteilhaft ist es, wenn zwischen dem Behälter, in dem das Inkontaktbringen des Katalysators mit einem inerten Gasstrom erfolgt, der getrocknete Katalysator nicht mehr mit der Umgebungsatmosphäre in Kontakt kommt.

Die Trocknung erfolgt im Phosgenproduktionsreaktor.

Generell kann das Inkontaktbringen des Katalysators mit einem inerten Gasstrom, im Rahmen der vorliegenden Erfindung auch als Trocknung bzw. Trocknungsprozess bezeichnet, zu verschiedenen Zeitpunkten bezogen auf den Prozess der Phosgenherstellung erfolgen zum Beispiel nach Katalysatoreinbau eines frischen unbenutzten Katalysators in einen Phosgenreaktor vor der Inbetriebnahme, oder nach einer Anlagenabstellung am bereits gebrauchten im Phosgenreaktor eingebauten Katalysator vor der Wiederinbetriebnahme zum Beispiel nach einer planmäßigen - (Wartungsarbeiten) oder unplanmäßigen - (Defekte an Anlagenteilen) Anlagenabstellung.

Bevorzugt erfolgt die Trocknung nach dem Einbau eines neuen Katalysators in den Phosgenreaktor vor der Inbetriebnahme.

Generell kann jeder Gasstrom verwendet werden, der ausreicht, um eine effektive Abfuhr von Wasser aus dem Katalysator zu gewährleisten und somit die Feuchte effektiv reduziert. Im Rahmen der vorliegenden Erfindung ist der Gasstrom der Volumenstrom des Gases.

Bevorzugt liegt der Volumenstrom des zur Trocknung verwendeten inerten Gases im Bereich von 0,05 bis 1,0 Nm³/h/Rohr, weiter bevorzugt liegt der Volumenstrom des zur Trocknung verwendeten inerten Gases im Bereich von 0,05 bis 0,8 Nm³/h/Rohr, besonders bevorzugt liegt der Volumenstrom des zur Trocknung verwendeten inerten Gases im Bereich von 0,1 bis 0,7 Nm³/h/Rohr. Beispielweise bei 0,55 Nm³/h/Rohr.

Generell kann das Inkontaktbringen des Katalysators mit dem inerten Gasstrom auf verschiedene Arten erfolgen. Bevorzugt erfolgt das Inkontaktbringen des Katalysators mit dem inerten Gasstrom kontinuierlich für die gesamte Dauer der Trocknung mit einem nahezu konstanten Volumenstrom.

In einer anderen bevorzugten Variante des Inkontaktbringens des Katalysators mit dem inerten Gasstrom, wird der inerte Gasstrom für eine gewisse Zeit, bevorzugt zwischen 1 min und 240 min, weiter bevorzugt zwischen 10 min und 180 min, besonders bevorzugt zwischen 20 min und 150 min, zum Beispiel für 90 min mit einem nahezu konstanten Volumenstrom, mit dem Katalysator in Kontakt gebracht und dann die Gaszufuhr unterbrochen und der mit Katalysator befüllte Reaktor mit einem Vakuum beaufschlagt. Das angelegte Vakuum wird bevorzugt für einen Zeitraum zwischen 1 min und 240 min, weiter bevorzugt zwischen 10 min und 180 min, besonders bevorzugt zwischen 20 min und 150 min, zum Beispiel für 60 min aufrechterhalten. Danach erfolgt bevorzugt die erneute Beaufschlagung mit einem inerten Gasstrom zum Beispiel Luft für einen bestimmten Zeitraum, bevorzugt zwischen 1 min und 240 min, weiter bevorzugt zwischen 10 min und 180 min, besonders bevorzugt zwischen 20 min und 150 min, zum Beispiel für 80 min, mit einem nahezu konstanten Volumenstrom. Dieser Wechsel zwischen Inkontaktbringen des Katalysators mit einem inerten Gasstrom gefolgt von Vakuum kann mehrfach wiederholt werden. Bevorzugt wird dieser Wechsel zwischen Gasstrom und Vakuum bis zu 50-mal wiederholt, weiter bevorzugt bis zu 20-mal wiederholt, besonders bevorzugt bis zu 10-mal wiederholt, zum Beispiel zwischen 3- und 5-mal wiederholt.

Sowohl das Inkontaktbringen des Katalysators mit einem kontinuierlichen inerten Gasstrom für die gesamte Dauer der Trocknung mit einem konstanten Volumenstrom, als auch der Wechsel zwischen konstantem inerten Gasstrom und Vakuum können zur Beschleunigung der Trocknung bei erhöhter Temperatur ausgeführt werden.

Gemäß Schritt d) der vorliegenden Erfindung kann optional das Katalysatorbett und / oder das Inertgas während des Trocknungsprozesses aufgeheizt werden.

Bevorzugt erfolgt die Trocknung bei einer erhöhten Temperatur im Bereich von 60 bis 170°C. Weiter bevorzugt bei einer erhöhten Temperatur im Bereich von 80 bis 160°C, besonders bevorzugt bei einer erhöhten Temperatur im Bereich von 90 bis 155°C, beispielsweise bei 152°C. Dabei ist es zunächst unerheblich ob der Katalysator zum Beispiel auf eine Temperatur im Bereich von 80°C bis 160°C aufgeheizt wird oder das verwendete Inertgas auf eine Temperatur von beispielsweise 60°C bis 130°C vorgeheizt wird.

Generell, ist auch die Kombination beider Aufheizmethoden nämlich die Aufheizung des Katalysatorbettes selbst und die Aufheizung des inerten Gasstroms denkbar. Bevorzugt wird nur eine der Aufheizmethoden verwendet. Besonders bevorzugt erfolgt die Aufheizung des Katalysatorbettes.

Insbesondere bevorzugt erfolgt die Aufheizung des Katalysatorbettes mit Hilfe des Reaktorkühlsystems. Generell hängt das zu erreichende Temperaturniveau von dem im Reaktor verwendeten Kühlmedium ab. Als fluide Wärmeträger können verschiedene Stoffe und Stoffgemische eingesetzt werden, die z.B. aufgrund ihrer Wärmekapazität oder aufgrund ihrer Verdunstungsenthalpie zur Ableitung der Reaktionswärme geeignet sind. Typischerweise wird ein flüssiger Wärmeträger verwendet, wie Wasser, Dibenzyltoluol (Marlotherm) oder Monochlorbenzol.

Bevorzugt erfolgt die Aufheizung des Katalysatorbettes mit Hilfe des Reaktorkühlsystems maximal bis zu einer Temperatur die 5°C unterhalb der Siedetemperatur des Kühlmediums bei Normaldruck liegt, besonders bevorzugt maximal bis zu 8°C unterhalb der Siedetemperatur des Kühlmediums bei Normaldruck liegt, insbesondere bevorzugt maximal bis zu 10°C unterhalb der Siedetemperatur des Kühlmediums bei Normaldruck liegt, zum Beispiel 12°C unterhalb der Siedetemperatur des Kühlmediums bei Normaldruck.

Gemäß Schritt b) der vorliegenden Erfindung wird die Restfeuchte des Katalysators durch Bestimmung der Restfeuchte im Abgasstrom bestimmt.

Die Bestimmung der Restfeuchte des Katalysators erfolgt durch eine Taupunktmessung im Abgasstrom.

Die Taupunktsmessungen können mit mobilen Handgeräten der Fa. CS-Instruments (DP500 /DP 510) oder der Fa. EXTECH (HD550) durchgeführt werden. Die Geräte sind mit einem Datenlogger versehen und decken einen Messbereich von -80 °C bis 50 °C ab. Diese Geräte messen die momentane Temperatur und relative Luftfeuchte und berechnen dann den Taupunkt.

Je nach Ausgestaltung kann die Feuchtemessung kontinuierlich also dauerhaft oder diskontinuierlich in Form von Stichproben durchgeführt werden. Bevorzugt wird keine Dauermessung durchgeführt. Der Trocknungsvorgang kann mehrere Tage dauern, da sich das trockene Gas beim anfänglichen Durchströmen der Schüttung erstmal durch die Wasseraufnahme sättigt.

Unter spezifikationsgerechter Lagerung und Handhabung haben die zur Verwendung als Phosgenkatalysator vorgesehenen Frischkohlen bis zu 25 mass% Wasser gebunden. Jedoch kann es auch in Abhängigkeit der lokalen Luftfeuchte und eventuell falscher Handhabung während der Lagerung oder Einbau zu Wassergehalten in der Frischkohle von bis zu 30 mass% kommen.

Gemäß Schritt c) der vorliegenden Erfindung erfolgt die Beendung des Trocknungsprozesses nach Erreichen der gewünschten Feuchte im Abgasstrom.

, Besonders bevorzugt ist die gewünschte Feuchte des Katalysators bei einem im Abgasstrom gemessenen Taupunkt von- 25°C, insbesondere bevorzugt bei einem Taupunkt von -40°C, erreicht.

Nach Erreichen der gewünschten Feuchte erfolgt der Wechsel von den jeweiligen Trocknungsbedingungen zu den jeweiligen Reaktionsbedingungen durch Austausch des inerten Gases oder inerten Gase durch die Reaktionsgase bevorzugt CO und Cl₂.

Vorzugsweise weist der Zulaufstrom im erfindungsgemäßen Verfahren einen stöchiometrischen Überschuss an Kohlenmonoxid zu Chlor von 0,001 bis 50 Mol% auf, so dass eine nahezu vollständige Umwandlung von Chlor gewährleistet ist. Wenn schwankende Chlorkonzentrationen im Chlorzufuhrstrom zu erwarten sind, wird man eher einen höheren Überschuss an Kohlenmonoxid wählen, aber im Allgemeinen wird der Überschuss aus Kostengründen so gering wie möglich gewählt, solange die vollständige Chlorumwandlung noch gewährleistet ist.

Der Feedstrom wird vorzugsweise mit einem absoluten Druck im Bereich von 0,5 bis 20 bar eingespeist. Besonders bevorzugt wird der Feedstrom mit einem Überdruck, z.B. bei einem absoluten Druck von 3 bis 7 bar (absolut) eingespeist. Je höher der Druck des resultierenden Reaktionsgemisches am Ausgang des Reaktors, desto höher kann das im Reaktionsgemisch enthaltene Phosgen kondensiert werden. Vorzugsweise ist der Druck des Reaktionsgemisches am Ausgang des Reaktors noch so hoch, dass das Phosgen zumindest teilweise mit Kühlwasser kondensiert werden kann.

Generell gibt es keine Beschränkungen in Bezug auf den Katalysator, solange dieser für die Herstellung von Phosgen geeignet ist. Alle Katalysatoren zur Herstellung von Phosgen, die im Stand der Technik bekannt sind, können als Katalysator verwendet werden, wie z.B. DONAUCARBON. Es können unterschiedliche Katalysatoren eingesetzt werden, beispielsweise SiC-Katalysatoren.

Vorzugsweise kommen Aktivkohlenkatalysatoren zum Einsatz.

Weiter bevorzugt, ist der Katalysator DONAUCARBON.

Es wird alternativ bevorzugt, dass der Katalysator vorzugsweise ein poröses Material aus Kohlenstoff, Mikroporen und Mesoporen umfasst, wobei die Mikroporen einen Porendurchmesser von weniger als 2 nm haben und wobei die Mesoporen einen Porendurchmesser im Bereich von 2 bis 50 nm haben; wobei das Volumen der Mesoporen des porösen Materials mindestens 0,45 ml/g beträgt. Vorzugsweise wird das Mikroporenvolumen nach DIN 66135-2 bestimmt und das Mesoporenvolumen nach DIN 66134 bestimmt und das Volumen der Mesoporen des porösen Materials nach dual-isotherm Non local Density Functional Theoretical (NLDFT) Advanced Pore Size Distribution (PSD) Technik bestimmt.

Vorzugsweise liegt das Verhältnis des Volumens der Mesoporen des porösen Materials im Verhältnis zum Volumen der Mikroporen des porösen Materials mindestens bei 1:1, besonders bevorzugt im Bereich von 1,1:1 bis 6:1, besonders bevorzugt im Bereich von 1,15:1 bis 5:1, besonders bevorzugt im Bereich von 1,2:1 bis 4:1. Es wird bevorzugt, dass das Volumen der Mesoporen des porösen Materials und das Volumen der Mikroporen des porösen Materials mithilfe von dual-isotherm NLDFT Advanced PSD-Technik bestimmt werden.

Vorzugsweise ist das Verhältnis des Volumens der Mesoporen des porösen Materials im Verhältnis zum Gesamtporenvolumen des porösen Materials, mindestens 0,5:1, besonders bevorzugt im Bereich von 0,5:1 bis 0,9:1, besonders bevorzugt im Bereich von 0,55:1 bis 0,85:1, besonders bevorzugt im Bereich von 0,6:1 bis 0,8:1, besonders bevorzugt im Bereich von 0,65:1 bis 0,8:1. Es wird bevorzugt, dass das Volumen der Mesoporen des porösen Materials und das Gesamtporenvolumen des porösen Materials mithilfe von dual-isotherm NLDFT Advanced PSD-Technik bestimmtwerden.

Vorzugsweise beträgt das Volumen der Mesoporen des porösen Materials mindestens 0,5 ml/g.

Hinsichtlich des Gesamtporenvolumens des porösen Materials ist es vorzuziehen, dass es im Bereich von 0,5 bis 2,25 ml/g liegt, besonders bevorzugt im Bereich von 0,55 bis 1,75 ml/g, besonders bevorzugt im Bereich von 0,65 bis 1,70 ml/g. Es ist bevorzugt, dass das Gesamtporenvolumen des porösen Materials mithilfe von dual-isotherm NLDFT Advanced PSD-Technik bestimmt wird.

Vorzugsweise kleiner oder gleich 40 %, besonders bevorzugt kleiner oder gleich 30 %, besonders bevorzugt kleiner oder gleich 25 %, bevorzugt kleiner oder gleich 20 %, besonders bevorzugt kleiner oder gleich 15 %, bevorzugt kleiner oder gleich 10 %, besonders bevorzugt kleiner oder gleich 5 %, besonders bevorzugt kleiner oder gleich 2,5 %, besonders bevorzugt kleiner oder gleich 1 %, des gesamten Porenvolumens des porösen Materials befindet sich in Mesoporen mit einem Porendurchmesser von mehr als 20 nm.

Es ist bevorzugt, dass das Volumen der Mesoporen des porösen Materials im Bereich von 0,50 bis 0,54 ml/g liegt, besonders bevorzugt im Bereich von 0,51 bis 0,53 ml/g, und dass das Verhältnis des Volumens der Mesoporen des porösen Materials im Verhältnis zum Gesamtporenvolumen des porösen Materials im Bereich von 0,70:1 bis 0,75:1 liegt, besonders bevorzugt im Bereich von 0,72:1 bis 0,74:1. Es ist bevorzugt, dass das Volumen der Mesoporen des porösen Materials und das Gesamtporenvolumen des porösen Materials mithilfe von dual-isotherm NLDFT Advanced PSD-Technik bestimmt werden.

Es wird alternativ bevorzugt, dass das Volumen der Mesoporen des porösen Materials im Bereich von 0,64 bis 0,70 ml/g liegt, besonders bevorzugt im Bereich von 0,65 bis 0,67 ml/g, und dass das Verhältnis des Volumens der Mesoporen des porösen Materials im Verhältnis zum Gesamtporenvolumen des porösen Materials im Bereich von 0,72:1 bis 0,78:1 liegt, besonders bevorzugt im Bereich von 0,73:1 bis 0,76:1. Es ist bevorzugt, dass das Volumen der Mesoporen des porösen Materials und das Gesamtporenvolumen des porösen Materials mithilfe von dual-isotherm NLDFT Advanced PSD-Technik bestimmt werden.

Vorzugsweise beträgt das Volumen der Mikroporen des porösen Materials, bevorzugt nach Dual-Isotherm NLDFT Advanced PSD-Technik bestimmt, höchstens 0,7 ml/g, besonders bevorzugt von höchstens 0,6 ml/g.

Hinsichtlich der BET-spezifischen Oberfläche des porösen Materials ist es vorzuziehen, dass diese mindestens 500 m²/g, besonders bevorzugt im Bereich von 500 bis 2500 m²/g, besonders bevorzugt im Bereich von 550 bis 1800 m²/g, besonders bevorzugt im Bereich von 600 bis 1500 m²/g ist.

Vorzugsweise liegt die gesamte spezifische Oberfläche des porösen Materials, gemessen nach Dual-Isotherm NLDFT Advanced PSD-Technik, bei mindestens 600 m²/g, besonders bevorzugt im Bereich von 650 bis 2000 m²/g, besonders bevorzugt im Bereich von 700 bis 1800 m²/g.

Vorzugsweise liegt die spezifische Oberfläche des porösen Materials, gemessen mithilfe von Dual-Isotherm NLDFT Advanced PSD-Technik, im Bereich von 70 bis 250 m²/g, besonders bevorzugt im Bereich von 80 bis 170 m²/g.

Vorzugsweise liegt das Verhältnis der spezifischen Oberfläche des porösen Materials, das durch die Mesoporen gebildet wird, relativ zur gesamten spezifischen Oberfläche des porösen Materials im Bereich von 0,07:1 bis 0,40:1, besonders bevorzugt im Bereich von 0,07:1 bis 0,20:1.

Es ist bevorzugt, dass das poröse Material ein pyrolysiertes Kohlenstoff-Aerogel ist.

Es ist bevorzugt, dass es sich bei dem porösen Material um ein aktiviertes pyrolysiertes Kohlenstoff-Aerogel handelt.

Vorzugsweise von 99 bis 100 Gewichtsprozent, besonders bevorzugt von 99,5 bis 100 Gewichtsprozent, besonders bevorzugt von 99,9 bis 100 Gewichtsprozent, besteht das poröse Material aus Kohlenstoff.

Vorzugsweise weniger als oder gleich 0,5 Gewichtsprozent des porösen Materials besteht aus Sauerstoff.

Vorzugsweise weniger als oder gleich 0,5 Gewichts%, besonders bevorzugt kleiner oder gleich 0,1 Gewicht-%, besteht das poröse Material aus Wasserstoff. Vorzugsweise weniger als oder gleich 0,01 Gewicht-% des porösen Materials besteht aus Stickstoff.

Vorzugsweise beträgt der Aschegehalt des porösen Materials weniger oder gleich 0,1 Gewichts%, besonders bevorzugt kleiner oder gleich 0,08 Gew.-%, besonders bevorzugt kleiner oder gleich 0,05 Gewichts%, besonders bevorzugt kleiner oder gleich 0,03 Gew.-%, besonders bevorzugt kleiner oder gleich 0,025 Gew.-%, bevorzugt kleiner oder gleich 0,01 Gewichts%, besonders bevorzugt kleiner oder gleich 0,0075 Gewicht-%, besonders bevorzugt kleiner oder gleich 0,005 Gewicht%, besonders bevorzugt kleiner oder gleich 0,001 Gewicht-%, bezogen auf das Gewicht des porösen Materials, wie aus den Gesamtreflexions-Röntgenfluoreszenzdaten berechnet.

Vorzugsweise weist das poröse Material einen Gehalt an Verunreinigungen an Elementen mit Ordnungszahlen von 11 bis 92, gemessen durch Gesamtreflexions-Röntgenfluoreszenz (TXRF) von weniger als 500 ppm, besonders bevorzugt weniger als 300 ppm, besonders bevorzugt weniger als 200 ppm, besonders bevorzugt weniger als 100 ppm auf.

Im Allgemeinen kann das erfindungsgemäße Verfahren in jedem Rohrbündelreaktor durchgeführt werden, der für die Herstellung von Phosgen durch Gasphasenreaktion von Kohlenmonoxid und Chlor in Gegenwart eines Kohlenstoffkatalysators geeignet ist.

Ein typischer Phosgenreaktor, der für das Verfahren der vorliegenden Erfindung verwendet werden kann, ist beispielsweise in der internationalen Patentanmeldung WO 03/072273 offenbart. Der Reaktor verfügt über ein Bündel von Kontaktrohren, die parallel zueinander in Längsrichtung des Reaktors in oberen und unteren Rohrböden versiegelt sind. An beiden Enden des Reaktors sind Hauben vorgesehen, in denen Gasverteiler angeordnet sind. Im Raum zwischen den Kontaktrohren wird ein flüssiges Wärmetauschermedium verwendet, Umlenkplatten sind horizontal angeordnet. Im Bereich der Öffnungen wird der Reaktor entrohrt, da in diesen Bereichen aufgrund des Übergangs des Kühlmittelflusses von einem Quer- zu einem Längsdurchfluss nur eine unzureichende Kühlung der Kontaktrohre möglich wäre. Für die Versorgung und Ableitung des Wärmetauschermediums sind Düsen oder Teilringkanäle vorgesehen. Optional kann ein Kompensator auf dem Reaktormantel verwendet werden, um thermische Belastungen auszugleichen.

Ein geeigneter Reaktor kann in Längsrichtung der Kontaktrohre in mindestens zwei Kühlzonen unterteilt werden, die z.B. durch Zwischenböden voneinander getrennt werden können. In den verschiedenen Kühlzonen können unterschiedliche Wärmeträger eingesetzt werden, deren Auswahl an die thermischen Bedingungen in den jeweiligen Kühlzonen angepasst werden kann. Vorzugsweise wird derselbe Wärmeträger verwendet. In diesem Fall kann z.B. in einer Kühlzone mit besonders hoher Wärmeerzeugung Siedekühlung eingesetzt werden, während in einer anderen Kühlzone Flüssigkeitskühlung eingesetzt wird. Bei der Siedekühlung ist es vorzuziehen, keine Umlenkplatten oder speziell konstruierte Umlenkplatten bereitzustellen, bei denen ein Rückstau aufsteigender Gasblasen verhindert wird.

Als fluide Wärmeträger können verschiedene Stoffe und Stoffgemische eingesetzt werden, die z.B. aufgrund ihrer Wärmekapazität oder aufgrund ihrer Verdunstungsenthalpie zur Ableitung der Reaktionswärme geeignet sind. Typischerweise wird ein flüssiger Wärmeträger verwendet, wie Wasser, Dibenzyltoluol (Marlotherm) oder Monochlorbenzol.

Die Kontaktrohre des Reaktors können eine Länge L im Bereich von 1,5 bis 12 m, vorzugsweise von 2,5 bis 8 m haben.

Ein geeigneter Reaktor für das erfindungsgemäße Verfahren kann mit 1000 bis 10000 Kontaktrohren ausgestattet werden und zylindrisch sein, mit einem Innendurchmesser von vorzugsweise 0,3 bis 6 m, weiter bevorzugt von 2 bis 5 m, insbesondere von 2,5 bis 4 m.

Im Reaktor ist ein Bündel, d.h. eine große Anzahl von Kontaktrohren, parallel zueinander in Längsrichtung des Reaktors angeordnet.

Jedes Kontaktrohr hat vorzugsweise eine Wandstärke im Bereich von 2,0 bis 4,0 mm, insbesondere von 2,5 bis 3,0 mm, und einen Innenrohrdurchmesser im Bereich von 20 bis 90 mm, vorzugsweise im Bereich von 30 bis 50 mm.

Die Kontaktrohre bestehen aus korrosionsbeständigem Material, z.B. Edelstahl, vorzugsweise Duplexstahl 1.4462, Edelstahl 1.4571 oder Edelstahl 1.4541 oder auch aus Nickellegierungen oder Nickel. Vorzugsweise werden die Rohrböden oder der gesamte Reaktor aus den vorgenannten Materialien, insbesondere aus Duplex oder Edelstahl, gebildet.

Der Reaktormantel und die Sockel können jedoch auch aus billigeren Metallen und Metalllegierungen wie Schwarzstahl hergestellt werden. Komponenten, die mit Reaktanten in Berührung kommen, können dann mit einer Schutzschicht aus höherwertigen Materialien beschichtet werden.

Die Kontaktrohre sind an beiden Enden in Rohrböden fluiddicht befestigt, bevorzugt verschweißt. Die Rohrböden bestehen ebenfalls aus einem korrosionsfesten Material, bevorzugt Edelstahl, insbesondere Duplexstahl, besonders bevorzugt aus demselben Material wie die Kontaktrohre. Die Abdichtung zu den Rohrböden erfolgt vorzugsweise durch Verschweißen. Beispielsweise können pro Rohr mindestens zwei Lagen Schweißnähte vorgesehen, die winkelversetzt, beispielsweise um 180° versetzt, hergestellt werden, so dass Anfang und Ende der jeweiligen Lagen nicht aufeinander liegen.

Beide Reaktorenden sind durch Hauben nach außen begrenzt. Eine Haube führt das Reaktionsgemisch an die Kontaktrohre, und der Produktfluss wird durch die Haube am anderen Ende des Reaktors entfernt.

In der Haube, in der das Reaktionsgemisch zugeführt wird, befinden sich vorzugsweise Gasverteiler, um den Gasstrom gleichmäßig zu verteilen, beispielsweise in Form einer Platte, insbesondere einer perforierten Platte.

Die Kontaktrohre werden mit dem festen Katalysator gefüllt. Die Katalysatorfüllung in den Kontaktrohren weist vorzugsweise ein Lückenvolumen von 0,33 bis 0,6 auf, insbesondere von 0,33 bis 0,45. Das Lückenvolumen bezieht sich auf die Katalysatorfüllung, bei der davon ausgegangen wird, dass es sich bei dem Feststoffkatalysator um einen festen Körper handelt. Die Porosität der Katalysatorkörper selbst, die z.B. 50 % betragen kann, wird nicht berücksichtigt.

Vorzugsweise liegt die erfindungsgemäße Flächenlast im Bereich von 0,5 kg Phosgen/m²s bis 6 kg Phosgen/m²s, besonders bevorzugt im Bereich von 0,7 kg Phosgen/m²s bis 5 kg Phosgen/m²s, noch besser im Bereich von 0,7 kg Phosgen/m²s bis 4 kg Phosgen/m²s, besonders bevorzugt im Bereich von 0,8 kg Phosgen/m²s bis 3,5 kg Phosgen/m²s.

Die Erhöhung der Flächenbelastung kann in bestehenden Reaktoren durch eine entsprechende Anpassung der Betriebsparameter, insbesondere durch eine Erhöhung des Volumenstroms der Reaktanten, erreicht werden. Neu konstruierte Reaktoren können jedoch bereits konstruktiv für einen optimierten Betrieb mit der vorgesehenen Flächenbelastung ausgelegt werden.

Die Erhöhung der Flächenbelastung kann durch eine Verringerung der Anzahl der Kontaktrohre im Reaktor mit entsprechender Verlängerung der Länge der Kontaktrohre erreicht werden. Beispielsweise verdoppelt eine Halbierung der Anzahl der Kontaktrohre mit demselben Rohrdurchmesser sowohl die Flächenbelastung als auch die Rohrlänge. Die entsprechenden Reaktoren sind daher schlanker, d.h. sie haben bei vergleichbarem GHSV einen kleineren Durchmesser, was sowohl bei der Produktion als auch bei der Kühlung der Kontaktrohre von Vorteil ist. Durch die höhere Gasgeschwindigkeit und höhere Fülllänge steigt der Druckverlust in den Kontaktrohren, führt aber gleichzeitig zu einer besseren Verteilung des Feedstroms auf alle Kontaktrohre.

Die Flächenbelastung kann auch bei gleicher Phosgenkapazität und Katalysatormenge bei unveränderter Rohranzahl durch eine Reduzierung des Durchmessers der einzelnen Kontaktrohre und erneut durch eine entsprechende Verlängerung der Kontaktrohre realisiert werden.

Selbstverständlich sind auch Kombinationen beider Maßnahmen denkbar, d.h. die Reduzierung der Rohranzahl sowie die Reduzierung des Rohrdurchmessers der einzelnen Rohre.

Vorzugsweise weist der Feedstrom im erfindungsgemäßen Verfahren einen stöchiometrischen Überschuss an Kohlenmonoxid zu Chlor von 0,001 bis 50 Mol% auf, so dass eine nahezu vollständige Umwandlung von Chlor gewährleistet ist. Wenn schwankende Chlorkonzentrationen im Chlorfeedstrom zu erwarten sind, wird man eher einen höheren Überschuss an Kohlenmonoxid wählen, aber im Allgemeinen wird der Überschuss aus Kostengründen so gering wie möglich gewählt, solange die vollständige Chlorumwandlung noch gewährleistet ist.

Der Feedstrom wird vorzugsweise mit einem absoluten Druck im Bereich von 0,5 bis 20 bar zugeführt. Besonders bevorzugt wird der Feedstrom mit einem Überdruck, z.B. bei einem absoluten Druck von 3 bis 7 bar (absolut) zugeführt. Je höher der Druck des resultierenden Reaktionsgemisches am Ausgang des Reaktors, desto höher kann das im Reaktionsgemisch enthaltene Phosgen kondensiert werden. Vorzugsweise ist der Druck des Reaktionsgemisches am Ausgang des Reaktors noch so hoch, dass das Phosgen zumindest teilweise mit Kühlwasser kondensiert werden kann.

Das oben beschriebene erfindungsgemäße Verfahren lässt sich besonders leicht realisieren, wenn der Reaktor bereits eine Möglichkeit zum Spülen mit einem Gas zur Entfernung von Phosgen aus dem Reaktorsystem installiert hat, wie es beispielsweise vorgeschlagen wird ( siehe : Phosgene Safety Practice for design, production and processing - International Isocyanate Inc.; WO2019/048371; Phosgene Safe Practice Guidelines - American Chemistry Council [https://www.americanchemistry.com/Phosgene-Safe-Practice-Guidelines/], WO2019/048371).
Figur 1:
   Phosgenkonzentration am Ausgang des Reaktors für getrocknete und ungetrocknete Aktivkohle.
   Die Aktivkohle nach Trocknung zeigt eine von bis zu 10% erhöhte Aktivität.
Figur 2:
   HCl-Konzentration am Ausgang des Reaktors für getrocknete und ungetrocknete Aktivkohle.
   Hier ist die erhöhte HCl-Bildung der ungetrockneten Kohle am Anfang der Reaktion erkennbar, die insbesondere bei Kontakt mit Wasser ( z.B. adsorbiertes Wasser in unteren Schichten eines technischen Reaktionsrohrs) zu Korrosionsproblemen führt.

### Ausführungsbeispiel:

### 1. Beispiel (Vergleichsbeispiel):

In einem Reaktionsrohr von 5,4 mm Durchmesser wurden ca 0,4 g eines kommerziellen Aktivkohlekatalysators (Donaucarbon) in Form von Granulaten zwischen 1-2 mm eingebaut, der sich vorher durch Lagerung an Luft mit Wasser gesättigt hatte. Die Füllhöhe der Katalysatorschüttung betrug etwa 32 mm. Das Reaktionsrohr wird durch einen umgebenden Kupferblock temperiert.

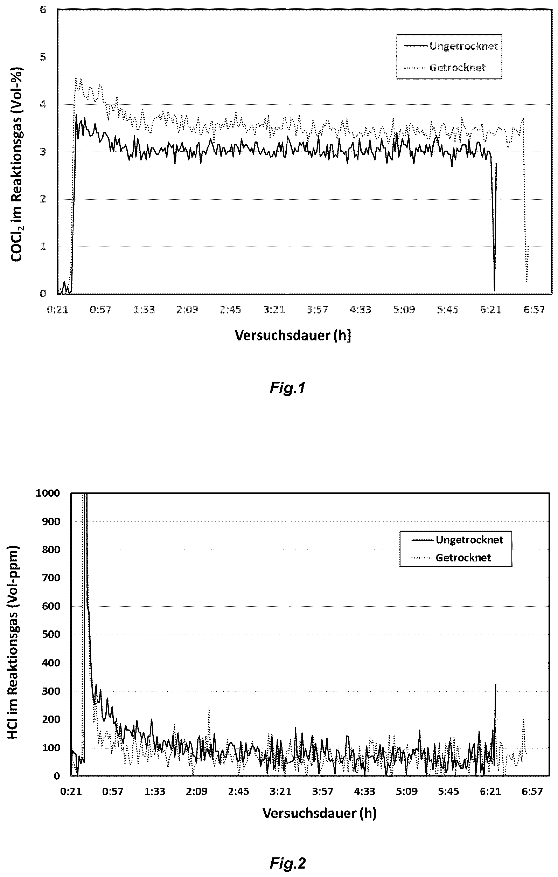

Dem Reaktionsrohr werden 1.99 NI/h CO, 1.83 NI/h Cl2 und 26.68 NI/h N2 jeweils aus Gasflaschen zugeführt. Die Reaktion der Edukte im Reaktionsrohr findet bei 100°C und ca. 5 bara über 6 Stunden statt. Am Ausgang des Reaktors werden die Reaktionsgase einer IR-Messung zugeführt und die Menge an gebildetem Phosgen in der Mischung gemessen. Der Verlauf der Phosgenkonzentration ist in Fig. 1 gezeigt. Nach einer kurzen Anlaufphase stellt sich eine konstante Phosgenkonzentration von im Mittel 3,04 vol% ein.

### 2. Beispiel (Erfindungsgemäß):

Der im Beispiel 1 beschriebene Versuch wurde wiederholt, wobei nach der Befüllung des Reaktors und vor der Inbetriebnahme der Reaktion das Aktivkohlebett mit einem Stickstoffstrom von 2 NI/h über 16h bei 150°C getrocknet wurde. Es wurde trockener Stickstoff mit der Bezeichnung 5.0 aus der Flasche verwendet. Dieser hatte bei einer Kontrollmessung einen Taupunkt von - 66 °C. Der Abgasstrom hatte nach der Trocknung von 16 h einen Taupunkt von - 48°. Bei der getrockneten Kohle wird nach der Anlaufzeit eine konstante Phosgenkonzentration von 3,59 vol% erreicht.

Die ebenfalls in Fig. 1 gezeigte Phosgenkonzentration, zeigt über die gesamte Versuchsdauer einen höheren Wert im Vergleich zur ungetrockneten Kohle aus Beispiel 1. Mithin zeigt die Aktivkohle nach Trocknung eine von bis zu 10% erhöhte Aktivität.

In Fig. 2 in der die HCl Konzentration am Ausgang des Reaktors gegen die Versuchsdauer aufgetragen ist, wird deutlich, dass die ungetrocknete Kohle gemäß Beispiel 1 eine erhöhte HCl-Bildung am Anfang der Reaktion zeigt, die insbesondere bei Kontakt mit Wasser (z.B. adsorbiertes Wasser in unteren Schichten eines technischen Reaktionsrohrs) zu Korrosionsproblemen führt.

## Patentansprüche

1. Verfahren zur Herstellung von Phosgen durch Umsetzung von Chlor und CO an einem Aktivkohlekatalysator, **dadurch gekennzeichnet, dass** der Aktivkohlekatalysator durch Reduktion des Wassergehalts getrocknet wird, wobei die Trocknung folgende Schritte umfasst:
a) Inkontaktbringen des Katalysators mit einem inerten Gasstrom
b) Bestimmung der Restfeuchte des Katalysators durch Bestimmung der Feuchte im Abgasstrom
c) Beendung des Trocknungsprozesses nach Erreichen der gewünschten Feuchte im Abgasstrom durch Wechsel vom inerten Gas auf die Reaktionsgase
sowie optional
d) aufheizen des Katalysatorbetts und /oder des inerten Gases während des Trocknungsprozesses,
wobei die Trocknung im Phosgenproduktionsreaktor erfolgt und die Restfeuchte des Katalysators durch Taupunktmessung des Abgasstroms am Reaktorausgang bestimmt wird und die Trocknung mindestens bis zu einem Taupunkt von -20°C durchgeführt wird.

2. Verfahren gemäß Anspruch 1 , wobei die Trocknung nach Katalysatoreinbau und vor Inbetriebnahme oder nach Anlagenabstellung vor der Wiederinbetriebnahme erfolgt.

3. Verfahren gemäß einem der Ansprüche 1 bis 2, wobei die Trocknung, nachdem Katalysatoreinbau und vor Inbetriebnahme des Phosgenreaktors erfolgt.

4. Verfahren gemäß einem der Ansprüche 1 bis 3, wobei das inerte Gas Stickstoff oder Luft ist.

5. Verfahren gemäß einem der Ansprüche 1 bis 4, wobei das zur Trocknung verwendete Inertgas mindestens einen Taupunkt von -35°C hat.

6. Verfahren gemäß einem der Ansprüche 1 bis 5, wobei der Abgasstrom des zur Trocknung verwendeten inerten Gases ins Freie geleitet wird.

7. Verfahren gemäß einem der Ansprüche 1 bis 6, wobei der Katalysator vor und / oder während der Trocknung auf eine Temperatur von 80°C bis 150°C gebracht wird.

8. Verfahren gemäß einem der Ansprüche 1 bis 6, wobei dass zur Trocknung verwendete Inertgas auf eine Temperatur von 60°C bis 130°C vorgeheizt wird.

9. Verfahren gemäß Anspruch 8, wobei dass zur Trocknung verwendete Inertgas in mobilen Heizeinheiten auf die Temperatur von 60°C bis 130°C vorgeheizt wird.

10. Verfahren gemäß einem der Ansprüche 1 bis 7, wobei der Katalysator mit Hilfe des Reaktorkühlsystems auf die gewünschte Temperatur vorgeheizt wird.

11. Verfahren gemäß Anspruch 10, wobei die Aufheizung des Katalysators mit Hilfe des Reaktorkühlsystems maximal bis zu einer Temperatur die 10°C unterhalb der Siedetemperatur des Kühlmediums des Reaktorkühlsystems bei Normaldruck liegt.

12. Verfahren gemäß einem der Ansprüche 1 bis 11, wobei der Volumenstrom des zur Trocknung verwendeten inerten Gases im Bereich von 0,05 - 1,0 Nm³/h/Rohr liegt, bevorzugt 0,2 - 0,4 Nm³/h/Rohr.

## Claims

1. A process for producing phosgene by conversion of chlorine and CO over an activated carbon catalyst, wherein the activated carbon catalyst is dried by reducing the water content, where the drying comprises the following steps:
a) contacting the catalyst with an inert gas stream
b) determining the residual moisture content of the catalyst by determining the moisture content in the offgas stream
c) ending the drying process after attainment of the desired moisture content in the offgas stream by switching from the inert gas to the reaction gases and optionally
d) heating up the catalyst bed and/or the inert gas during the drying process,
where the drying is effected in the phosgene production reactor and the residual moisture content of the catalyst is determined by measuring the dewpoint of the offgas stream at the reactor outlet and the drying is conducted at least down to a dewpoint of -20°C.

2. The process according to claim 1, wherein the drying is effected after catalyst installation and before startup or after plant shutdown and before restarting.

3. The process according to any of claims 1 to 2, wherein the drying is effected after catalyst installation and before startup of the phosgene reactor.

4. The process according to any of claims 1 to 3, wherein the inert gas is nitrogen or air.

5. The process according to any of claims 1 to 4, wherein the inert gas used for drying has at least one dewpoint of -35°C.

6. The process according to any of claims 1 to 5, wherein the offgas stream of the inert gas used for drying is released into the atmosphere.

7. The process according to any of claims 1 to 6, wherein the catalyst is brought to a temperature of 80°C to 150°C before and/or during the drying.

8. The process according to any of claims 1 to 6, wherein the inert gas used for drying is preheated to a temperature of 60°C to 130°C.

9. The process according to claim 8, wherein the inert gas used for drying is preheated to the temperature of 60°C to 130°C in mobile heating units.

10. The process according to any of claims 1 to 7, wherein the catalyst is preheated to the desired temperature with the aid of the reactor cooling system.

11. The process according to claim 10, wherein the heating of the catalyst with the aid of the reactor cooling system not more than up to a temperature 10°C below the boiling temperature of the cooling medium of the reactor cooling system at standard pressure.

12. The process according to any of claims 1 to 11, wherein the volume flow rate of the inert gas used for drying is in the range of 0.05-1.0 m³ (STP)/h/tube, preferably 0.2-0.4 m³ (STP)/h/tube.

## Revendications

1. Procédé de production de phosgène par transformation de chlore et de CO sur un catalyseur à charbon actif, **caractérisé en ce que** le catalyseur à charbon actif est séché par réduction de la teneur en eau, le séchage comprenant les étapes suivantes :
a) mise en contact du catalyseur avec un flux de gaz inerte
b) détermination de l'humidité résiduelle du catalyseur par détermination de l'humidité dans le flux d'effluent gazeux
c) fin du processus de séchage après avoir atteint l'humidité souhaitée dans le flux d'effluent gazeux par changement du gaz inerte en gaz de réaction ainsi qu'éventuellement
d) chauffage du lit catalytique et/ou du gaz inerte pendant le processus de séchage,
le séchage étant effectué dans le réacteur de production de phosgène et l'humidité résiduelle du catalyseur étant déterminée par mesure du point de rosée du flux d'effluent gazeux à la sortie du réacteur et le séchage étant réalisé au moins jusqu'à un point de rosée de - 20 °C.

2. Procédé selon la revendication 1, le séchage étant effectué après l'installation du catalyseur et avant la mise en service ou après l'arrêt de l'installation avant la remise en service.

3. Procédé selon l'une des revendications 1 à 2, le séchage étant effectué après l'installation du catalyseur et avant la mise en service du réacteur à phosgène.

4. Procédé selon l'une des revendications 1 à 3, le gaz inerte étant l'azote ou l'air.

5. Procédé selon l'une des revendications 1 à 4, le gaz inerte utilisé pour le séchage présentant au moins un point de rosée de -35 °C.

6. Procédé selon l'une des revendications 1 à 5, le flux d'effluent gazeux du gaz inerte utilisé pour le séchage étant guidé à l'extérieur.

7. Procédé selon l'une des revendications 1 à 6, le catalyseur étant porté à une température de 80 °C à 150 °C avant et/ou pendant le séchage.

8. Procédé selon l'une des revendications 1 à 6, le gaz inerte utilisé pour le séchage étant préchauffé à une température de 60 °C à 130 °C.

9. Procédé selon la revendication 8, le gaz inerte utilisé pour le séchage étant préchauffé dans des unités de chauffage mobiles à la température de 60 °C à 130 °C.

10. Procédé selon l'une des revendications 1 à 7, le catalyseur étant préchauffé à la température souhaitée à l'aide du système de refroidissement du réacteur.

11. Procédé selon la revendication 10, le chauffage du catalyseur à l'aide du système de refroidissement du réacteur au maximum jusqu'à une température inférieure de 10 °C à la température d'ébullition du milieu de refroidissement du système de refroidissement du réacteur à la pression normale.

12. Procédé selon l'une des revendications 1 à 11, le débit volumique du gaz inerte utilisé pour le séchage étant situé dans la plage de 0,05 - 1,0 Nm³/h/tuyau, de préférence de 0,2 - 0,4 Nm³/h/tuyau.
